# EUROPEAN PATENT APPLICATION

(11) **EP 2 267 432 A1**
(43) Date of publication of application: **29.12.2010**
(21) Application number: 09163828.8
(22) Date of filing: 25.06.2009
(51) Int. Cl.: G01N 21/45, G01N 21/77

(54) **Optical sensor system**

(71) Applicant: Nederlandse Organisatie voor Toegepast -Natuurwetenschappelijk Onderzoek TNO, 2628 VK Delft (NL)
(72) Inventor: Harmsma, Peter Johan, NL-3555 BN Utrecht (NL); Yousefi, Mirvais, NL-1013 EN Amsterdam (NL)
(74) Representative: Hatzmann, Martin

(57) **Abstract**

An optical sensor system is used to sense an effect of external fluid upon propagation of light. The sensor system uses a broadband light source, a broadband light detector and an interferometer. The interferometer has branch comprising a first and second optical filter respectively, each with alternating pass bands and blocking bands as a function of wavelength at wavelength positions defined by optical path lengths of a first and second waveguide in the first and second filter. A shielding layer shield at least part of the first optical path from influence of the fluid and leaves at least part of the second optical path exposed to influence of the fluid.

## Description

### Field of the invention

The invention relates to an optical sensor system, for sensing properties of material in its environment and a sensor for such a system.

### Background

It is known to use an optical sensors to measure properties of external material through the effect of external material on light propagation through waveguides in the sensor. The external material, i.e. material that is not in permanent rigid contact with components of the sensor, may be a fluid for example, left free to flow to the sensor, or material that can move to the sensor. Exposure of the waveguide to external material inherently has effect on propagation when it is in contact with the waveguide, because the index of refraction of the material affects the evanescent field near the waveguide and/or because it exerts pressure on the waveguide that result in stress in the material of the waveguide, which affects propagation. Measurement of such effects involves monitoring the effect of the material on transmission through the waveguide, in terms of changes in optical phase delay and/or absorption, to observe the effect of the presence of the material in contact with the waveguide.

The waveguide may be incorporated in a Mach-Zehnder interferometer in order to provide for the detection of the effect of the external material on phase delay. A Mach-Zehnder interferometer is a device with a first and second optical coupler and with a pair of transmission lines coupled from the outputs of the first optical coupler to the inputs of the second optical coupler. Light is applied to one input of the first optical coupler. This has the effect that the light intensity at one of the outputs of the second optical coupler will vary as a function of changes in transmission through one of the waveguides.

US2004023396 describes a photonic biosensor comprising a waveguide, a ring resonator or disk resonator and a coupler that couples the ring or disk resonator to the waveguide between the input coupler and the output coupler. The ring resonator or disk resonator itself is another waveguide, but with much stronger wavelength dependent changes in transmission. A probe substance may be deposited on the wall of ring resonator to facilitate interaction of the biological material with the ring resonator. The ring resonator is used to increase the effect of attached biological material on transmission to the output. Effectively, the light in the ring passes the attached material a number of times, so that the material repeatedly affects transmission. A light source such as a laser or a LED is used to feed light into the waveguide. Part of this light is coupled to the ring or disk resonator and back to the waveguide. The output of the waveguide is monitored.

US2004023396 discloses an embodiment wherein phase changes induced by the ring or disk resonator are converted into changes in transmission amplitude by means of interference. This is done by placing the waveguide with the ring oscillator in a branch of a Mach Zehnder interferometer with a waveguide in the other branch.

The photonic biosensor of US2004023396 has the problem that the measurement output may be affected by temperature effects, which may shift the resonance wavelength of the resonator. When it is needed to prevent this, the temperature of the device may be controlled. However, this will complicate the sensor and it may make the sensor unsuitable to environments wherein electrical conductors cannot be tolerated. Moreover, it may be difficult to realize temperature compensation when the sensor is used to sense properties of material that provides for good heat conduction to the environment.

WO01/18598 describes an optical modulator that can be used to produce light with modulated amplitude. The optical modulator comprises a Mach Zehnder interferometer with two branches, each with a waveguide that is coupled to a ring resonator. Laser light is fed to the Mach Zehnder interferometer and a modulating voltage is applied to one of the branches to induce a phase shift. The Mach Zehnder interferometer is used to convert this phase shift to amplitude modulation.

### Summary of your invention

Among others it is an object to provide for an optical sensor for sensing the effect of external material on propagation of light, which sensor is of simple design and which does not suffer from strong temperature effects.

A sensor according to claim 1 is provided.

Herein a broadband light source and a broadband detector are used to detect the influence of external material upon an interferometer. Filters with alternating pass bands and blocking bands are used in respective branches of the interferometer, the filters being implemented on the same substrate. A layer, which may also act as substrate, is used that leaves a first waveguide in the first filter at least partly exposed to influence of external material, so that propagation through that waveguide is influenced by the material, whereas a waveguide in the second filter is shielded from the influence of the material, or at least shielded more than the waveguide in the first filter. By using filters, sharpened phase variations are provided

In such an interferometer the detected broadband output intensity from the interferometer will be sensitive to changes of the influence of the external material only at values of said influence that cause at least some change in overlap between the transitions between the bands. The overlap is independent of temperature because the positions of the edges are determined by the optical path lengths of the waveguides in the different filters, and the optical path lengths depend in the same way on temperature because they are implemented on the same substrate.

In an embodiment, each filter is realized by means of a ring resonator coupled to a further waveguide from the input to the output of the branch, the ring resonator of the branch loading the further waveguide, a coupler being formed between the waveguide and the ring resonator. This provides for a simple structure. In another embodiment a first and second intermediate coupler are used, at mutually different locations along the ring resonator the input of the interferometer branch being coupled to the first intermediate coupler and the output of the interferometer branch being coupled to the second intermediate coupler. It has been found that this results in a better dynamic sensing range and/or to improve sensing linearity than in the embodiment with the ring resonator coupled in parallel.

In an embodiment a further interferometer on the same substrate is used, each with branches that contain respective filters, with one or more dimensions that differ from the first mentioned interferometer. In one embodiment for example, the filters of the further interferometer may be mutually matched, but have a dimension that it at least a factor of two smaller than that of the first mentioned interferometer. This provides for disambiguation of measurements and it extends the measurable value range. In another embodiment, the ring resonators of the further interferometer may have a slight mismatch to provide for sensitivity in dead zones in the measurable value range that occur when broadband light detection is used to obtain sensor results.

In an embodiment a plurality of ring resonator may be used in each filter branch. This makes it possible to extend the measurable value range with a single ring filter and/or to improve sensing linearity.

In an embodiment one or more optical fibers may be used to couple a light source and a detector to the sensor for applying and receiving light from the sensor. This makes it possible to use the sensor to sense effects in a region where no electrical conductors can be tolerated, such as in a magnetic resonance scanner, as the light source and the detector can be kept out of this region. The sensor may comprise a reflector to reflect emerging light from the interferometer back into the interferometer. In this case a single fiber may suffice both to supply light and to receive back light.

In another embodiment a series coupling of a first and second filter is used, wherein the light from a light source travels to a detector through the first and second filter successively, at least one of the filters having a waveguide exposed to the influence of external material.

In an embodiment matching filters may be used, with waveguides of the same dimension, which are exposed to a different degree to the influence of external material. In this case the broadband output intensity is determined by the overlap between the pass bands of the filters, which depends on the external influence.

In another embodiment, filters with a series of resonance peaks may be used, such as ring resonators, with a ratio of between the distances between the peaks in one filter relative to the distances in the other, the ratio being N:M, wherein N and M are unequal integers, for example M=N+1. Thus, the distance between overlapping peaks is N times the distances between peaks, making it possible to detect the changes in the size of individual peaks due to the external influences with relative coarse wavelength selection techniques.

In another embodiment peak distances of the first filter may differ from the peak distances of the second filter by at least a factor of two. This makes it possible to measure the size of individual peaks using high wavelength resolution techniques without ambiguity. In this embodiment the waveguides in the different filters may both be exposed to influence of the external material, possibly even to the same degree.

In an embodiment a shielding layer may be used, shielding at least part of the first waveguide in the first filter from the external material and leaving at least part of the second waveguide in the second filter exposed to the external material, the part of the second waveguide that is left exposed to the external material having a larger size than an exposed part of the first ring resonator, if any.

In an embodiment a sensor system may be used, comprising a light source coupled to the input and a detector coupled to the output, wherein at least one of the light source and the light detector is spectrally scannable. In another embodiment a broadband light source coupled to the input and a broadband light detector coupled to the output may be used.

### Brief description of the drawing

These and other object and advantageous aspects will become apparent from a description of exemplary embodiments using the following figures.
Figure 1 shows a schematic top view of a sensor device.
Figure 2 shows a cross section of a sensor device.
Figures 3a-c shows transmission coefficients and an input spectrum
Figures 4, 5 shows sensing systems
Figure 6 shows a further sensor device.
Figure 6a shows a transmission coefficient
Figure 7 shows a multi-ring sensor arrangement
Figure 8 shows transmission coefficients
Figure 9 shows transmission coefficients
Figure 10 shows a multi-ring sensor arrangement
Figure 10a illustrates groups of peaks
Figure 11 shows a sensor arrangement with a reflector

### Detailed description of exemplary embodiments

In a first series of embodiments an interferometer is provided with a first and second branch that both contain a filters, with alternating pass bands and blocking bands. As used herein the term "band" refers both to peaks such as resonance peaks and wider bands. The terms pass band and blocking band are used as relative terms for bands that provide transmission coefficients with relatively larger and relatively smaller amplitudes, without necessarily requiring amplitudes of one and zero. The position of the bands is determined by the optical path length of waveguides in the filters, which is inherently influenced by external material that exerts pressure on the waveguides in at least one of the filters and/or captures part of the evanescent field of the waveguide. A waveguide may be a strip of optically transparent material with a cross-section and a refractive index relative to its environment such that it supports a mode of propagation of light confined along the length of the strip without radiation in other directions, from one position to another position along the strip. More generally, as used herein a waveguide is any structure that directs light from an input at one position confined to an output at another position.

The waveguides of the different filters are exposed to mutually different degrees to an influence of external material (e.g. one not exposed not at all). Exposure of the waveguide to external material inherently has effect on propagation through the waveguide. The stronger changes in transmission near the edges of the bands are used to provide increased sensitivity to the external influence. The interferometer is designed to make it possible to use broadband and generally polarization independent light detection techniques to detect the effect of the external material.

Therefore a method of measuring influence of fluid material is provided, which comprises providing a first and second optical filter on a common substrate, each filter with alternating pass bands and blocking bands as a function of wavelength at wavelength positions defined by optical path lengths of a first and second waveguide in the first and second filter respectively; exposing at least part of the first waveguide to the fluid and shielding at least part of the second waveguide exposed from influence of the fluid, so that propagation in the first and second waveguide is affected mutually differently by influence of the fluid; applying broadband light through the first and second filter; and measuring broadband light amplitude when the influence of the material causes the transitions of the first and filter to overlap. Filters in an interferometer configuration may be used, wherein the phase shifts corresponding to the transitions give rise to amplitude variations or filters coupled in series may be used wherein shift between pass bands of different filters give rise to amplitude variations.

By way of example a device containing filters implemented as ring resonators will be described. But it should be appreciated that filters may be implemented with other types of resonators may be used, such Fabry-Perot resonators and/or waveguides with Bragg gratings, photonic crystals, plasmonic resonators, etc.

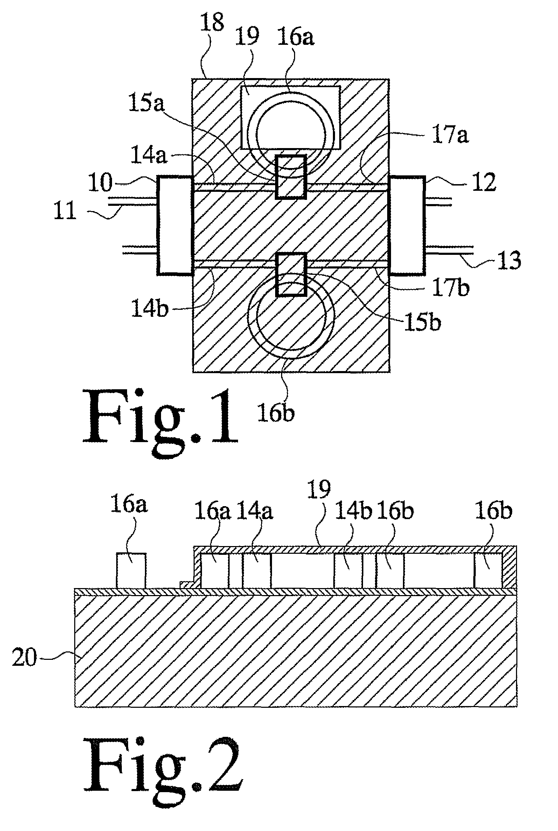

Figure 1 shows a top view of a sensor integrated on a substrate. The sensor comprises an input optical coupler 10, an input waveguide 11, an output optical coupler 12 and an output waveguide 13. Input optical coupler 10 and output optical coupler 12 are used in a Mach-Zehnder interferometer configuration, with a first and second interferometer branch coupled between outputs of input optical coupler 10 and inputs of output optical coupler 12. Input optical coupler 10 acts as an optical splitter and output optical coupler 12 acts as an optical combiner.

Although couplers 10, 12 and other couplers will be schematically shown as boxes, it should be appreciated that they may be implemented by means of adjacent waveguides, in a way that is known per se. In one embodiment directional couplers may be used, which may be realized by providing for waveguides in parallel at a mutual distance that allows for coupling between the waveguides over a certain length. 2x2 couplers may be used for example. Alternatively, a Multi Mode Interference coupler (MMI) may be used, which comprises a wide multimode waveguide section instead of parallel waveguides over said length. An MMI comprises input and output waveguides attached and a wider multimode waveguide section between the input and output waveguides and attached to them.

Instead of 2x2 couplers, any NxM couplers may be used. In an embodiment input coupler of the Mach Zehnder interferometer may be a 1x2 coupler. Dependent on the type of coupler various distinct phase relations may be realized at the outputs of the coupler.

Each branch of the interferometer comprises a first wave guide part 14a,b, an intermediate optical coupler 15a,b a second waveguide part 17a,b and a ring resonator 16a,b. Ring resonators 16a,b are not drawn to scale. Moreover, although circular ring structures are shown, it should be appreciated that any round going geometry may be used. the term "ring" resonator refers to the round going light path rather than to the shape. Although rings with a central opening are shown, it should appreciated that instead the central part of the ring may be of the same light passing material as the remainder of the ring. Ring resonators of this type are also called disc resonators.

Within each branch the output of input optical coupler 10 is coupled to a first input of intermediate optical coupler 15a,b via the first waveguide part 14a,b and a first output of intermediate optical coupler 15a,b is coupled to the input of output optical coupler 12 via second waveguide part 17a,b. A second input and second output of the intermediate optical coupler 15a,b are coupled to each other via ring resonator 16a,b (as mentioned appreciated the intermediate optical coupler 15a,b may be implemented by means of adjacent waveguides, in which case ring resonator 16a,b may form a closed waveguide loop, running partly parallel to a waveguide that comprises first and second waveguide part 14a,b, 17a,b). The branches have substantially identical layouts, that is, they have ring resonators 16a,b of substantially equal dimension, waveguide parts 14a,b, 17a,b of substantially equal total length and intermediate couplers 15a,b with substantially equal layout.

Furthermore, the sensor comprises a cover layer 18 over at least part of the waveguide parts 14a,b, 17a,b and the ring resonators 16a,b, which shields this part from outside influence of material in the environment of the sensor. An opening 19 is provided in cover layer 18, which leaves at least part of the ring resonator 16a in the first interferometer branch open to influence of material in the environment of the sensor. Thus light propagation in this part of ring resonator 16a may depend on influences such as pressure from a liquid or gas outside the device, attachment of molecules from such a liquid or gas to ring resonator 16a etc. The corresponding part of the ring resonator 16b in the second interferometer branch is covered by cover layer 18.

Figure 2 show the sensor in cross-section, including a substrate 20, with waveguides cross-section that form part of first waveguide parts 14a,b and ring resonators 16a,b and cover layer 18. Substrate 20 may be composed of silicon. When an infrared operation range is used, waveguide parts 14a,b, 17a,b and ring resonators 16a,b may be composed of silicon. A silicon on insulator configuration may be used, with an insulator layer (not shown) between substrate 20 on one side and waveguide parts and ring resonator parts on the other side. Other material choices are possible instead of silicon, such as glass, polymers, oxy-nitrides, III-V semiconductors, etc. A silicon oxide layer may be provided between substrate 20 and waveguide parts 14a,b, 17a,b and ring resonators 16a,b.

A waveguide line width and line height of 400 nm and 300nm may be used respectively, but other widths and lengths are possible. Cover layer 18 may be composed of polyimide for example. Other examples of suitable cover layers are dielectric layers such as SiOx, SiNx layers. Couplers 10, 12, 15a,b, waveguide parts 14a,b, 17a,b, ring resonators 16a,b and cover layer 18 may be made of deposited layers with a layout defined by means of photolithographic techniques.

In an embodiment the function of openings in the cover layer may be taken over by openings in substrate 20. In this embodiment a window is etched from the bottom of the substrate to the locations that are shown as uncovered. This may be advantageous for pressure sensing, as it allows the exposed part of the waveguides of the ring resonator to bend under influence of a pressure difference between fluids on opposite sides of the substrate, causing a mechanical deformation and associated material stress that results in propagation changes. A membrane layer with a thickness that is a fraction of a thickness of the substrate (e.g. at most one half and preferably much less) may be kept adjacent the waveguides in the openings. The membrane layer may be a silicon oxide layer on the substrate that is not affected by etching when the substrate is etched through from below.

Although an embodiment is shown wherein one ring resonator is entirely covered and the other is partly uncovered, it should be appreciated that different degrees of coverage may be used, as long as the coverage is not the same for both ring resonators. For example, one ring resonator may be entirely exposed and/or both ring resonators may be at least partly exposed.

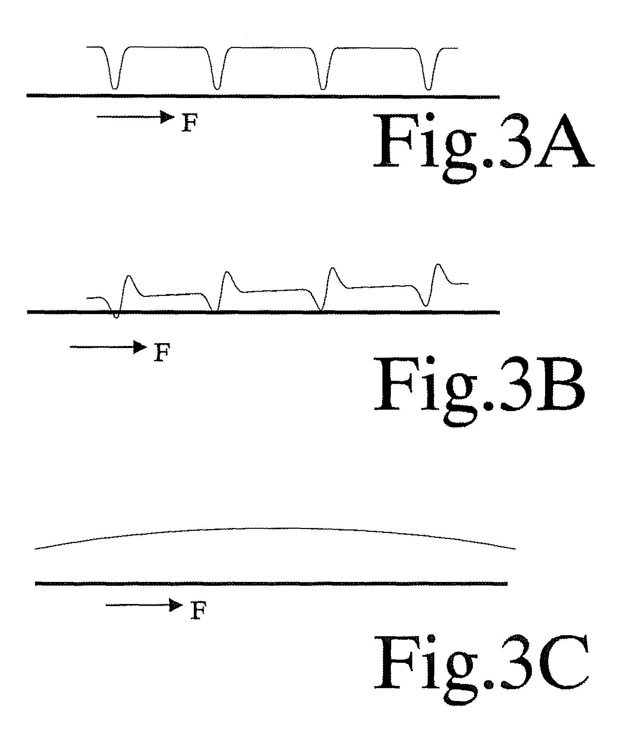

Figure 3a shows the amplitude of the transmission coefficient from first waveguide part 14a,b to its corresponding second waveguide part 17a,b as a function of the frequency of the light (which is inversely proportional to the wavelength), over part of the frequency range. Figure 3b shows the phase of this transmission coefficient.

It should be emphasized that the figures are only schematic. For example, in practice many more peaks may be present, when the round going path length in the ring resonator 16a,b is a large multiple of the wavelength (e.g. a thousand times the wavelength). The use of larger rings has the advantage that losses due to bends can be reduced. In a resonator with a disc such losses can be avoided even if a much smaller diameter is used.

The source of the peaks is known per se. In general terms it may be understood as follows. In each branch the intermediate coupler 15a,b of the branch couples first wave guide part 14a,b, second waveguide part 17a,b and ring resonator 16a,b. Intermediate coupler 15a,b defines wave coupling coefficients that relate the wave vectors in first wave guide part 14a,b, second waveguide part 17a,b and ring resonator 16a,b to each other. A simple example of such a relation is Vr=S21*V1+S22*A*Vr, V2= S11*V1+S12*A*Vr. Herein V1 and V2 are wave vectors in first and second wave guide part 14a,b and 17a,b respectively. Vr is a wave vector in ring resonator 16a,b. S11, S12, S21 and S22 are coupling coefficients and A is a propagation factor that accounts for propagation along ring resonator 16a,b. From these expressions Vr can be eliminated to produce a relation that expresses V2 as in terms of V1 multiplied by the transmission coefficient.

The phase of the propagation factor, A, varies in proportion to the round going path length of the ring resonator 16a,b and the frequency of the light (which is inversely related to the wavelength of the light in the ring resonator 16a,b). In an embodiment the round going path length is at least ten times the wavelength. The propagation factor, A, gives rise to resonant behaviour when the circumference of the ring corresponds to an integer number of wavelengths. As a function of the frequency of the light this resonant behavior repeats at a series of resonance frequencies. The intermediate coupler 15a,b is dimensioned so that the amplitude of the transmission coefficient at the resonance frequencies of resonance of ring resonator 16a,b than way from these frequencies, e.g. at most 0.9 times the amplitude away from these frequencies.

The Mach Zehnder interferometer configuration with two branches between input optical coupler 10 and output optical coupler 12 has the effect that a zero amplitude output occurs at an output 13 of output optical coupler 12 under certain conditions when light is applied to one input 11 of input optical coupler 10. For example when the branches provide for equal propagation at a wavelength of that light, a 2x2 MMI input coupler is used, which has a phase difference of 90 degrees between its outputs and a 2x2 MMI output coupler is used, zero amplitude output occurs. In other embodiments other types of coupler may be used, which provide for different phase transfer and in this case zero amplitude may occur when there are predetermined phase mismatches between the phase of the transfer coefficients of the branches.

At wavelengths where there is a difference between the propagation through the branches, non-zero amplitude may occur. Such differences may be induced by material in the environment of the sensor that reaches the exposed part of the ring resonator 10 in the first branch but not the corresponding part of the ring resonator 10 that is covered by cover layer 18.

The primary effect of material in the environment of the sensor is a shift of the frequency dependence of the transmission coefficient shown in figures 3a,b. In addition the peaks may be widened or narrowed, their amplitude may change and/or the frequency dependency may be compressed or widened. The shift of the phase dependence results in a changing phase difference between light in the different branches of the interferometer at a wavelength near resonance. At wavelengths away from resonance, the relative phase shift is small.

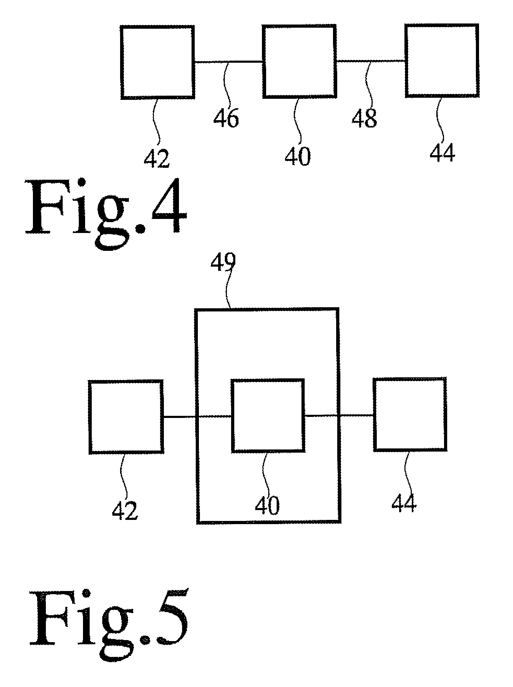

Figure 4 shows a detection system with the sensor 40, as described in the preceding, a light source 42 and a detector 44 coupled to the input and output of sensor 40 via optical fibres 46, 48 respectively. In one embodiment a monochromatic (laser) light source 42 is used to apply monochromatic light at a wavelength near resonance to the interferometer and a broadband intensity detector 44 is used to measure the resulting light intensity at the output of the interferometer, in order to sense the effect of material in the environment of the sensor. Equivalently, a broadband light source 42 may be used at the input and a monochromatic light detector 44, such as a multi-channel monochromatic detector or a (scanned) tunable detector, may be used, tuned to a wavelength near resonance. Use of monochromatic light input and/or monochromatic light detection at a wavelength away from resonance could also be used, but in this case a much smaller sensitivity to material in the environment would result. Effectively, the sensitivity of the sensor would correspond to the case where each branch consists of a waveguide, without a ring resonator.

In this monochromatic embodiment, use of matched ring resonators 16a,b in the different branches has the effect that common influences, such as temperature changes affect the branches in the same way, so that measurements at a wavelength in fixed relation to the peaks is independent of the common influence. However, if the effect of temperature changes is large, this can be realized only if the monochromatic wavelength is adapted to the temperature, so that it is kept at the same position relative to the resonance peaks. Otherwise, the nonlinearities in the resonance peaks would have the effect of mixing temperature effects into the measurement of the effect of material from the environment.

In an embodiment a broadband light source 42 and a broadband detector are used. As used herein, "broadband" means that the bandwidth is (much) broader than that of the resonance peaks. Figure 3a shows an example of a spectrum that is broadband in this sense, at the same frequency scale as figures 2a,b. It should be emphasized that this is merely an example: in practice a much broader spectrum may be used and many more resonance peaks will lie within the spectrum.

Due to the combined use of broadband light and broadband detection, the detected broadband amplitude will be a sum of contributions from different wavelengths. This always includes wavelengths near resonance peaks and wavelengths away from such peaks, even though the positions of the peaks may shift due to temperature effects. The latter wavelengths contribute little or nothing to the composite detection result, because the interferometer configuration and matching of the branches ensures that their amplitude is zero or near zero.

At the wavelengths of the peaks the interferometer branches may be out of balance, so that non-zero amplitude occurs for those wavelengths. However, this does not necessarily mean that the detected broadband amplitude is always responsive to influence of external material. This influence may lead to a shift of the wavelength were non-zero amplitude occurs, without changing the sum of the amplitude contributions for all wavelengths that contribute to the broadband amplitude. Such shifts without changes of the detected broadband amplitude will occur if one branch does not contain a resonator but a waveguide that provides for a substantially wavelength independent transmission coefficient, or when the resonance peaks of the resonator of one branch lie in a wavelength range where the other branch has a substantially wavelength independent transmission coefficient.

Substantial changes in the detected broadband amplitude responsive to changes in the influence of the external material occur only when there is a change in overlap between the resonance peaks, because in this case a changing influence of the external material not only make the non-zero amplitude portions of the interferometer output shift, but they also have the effect of changing the amplitude of these portions. When the resonance peaks of the branches are exactly matched, this amplitude will approach zero when the influence of the external material shifts the peaks to exact overlap. This makes it possible to detect the influence of the external material using broadband detection.

Although this broadband detectability has been illustrated for an example using ring resonators, it should be appreciated that the broadband detectability occurs more generally when the branches each contain a filter with alternating pass bands and blocking bands, wherein the relative positions of the transitions between the bands of the two branches is changed under influence of the external material. The transitions between the bands (e.g. the flanks of the resonance peaks) are associated with strong changes of the phase of the transmission coefficient of the filters and when there is overlap between the wavelength ranges wherein these strong changes occur, a broadband detectable effect occurs. Moreover, when the positions of the transitions are determined by optical path lengths of waveguides in the respective filters, the relative positions of the transitions in the different branches with respect to each other will not change under common effects such as substrate temperature changes. This means that the degree of influence of the external material at which sensitivity to changes of that influence occurs does not depend on such common effects.

It is to be noted that "dead zones" may also occur wherein the broadband detection result is not, or hardly, responsive to changes in the influence of the external material. As explained, this situation arises in ranges of degree of external influences where the resonance peaks of the ring resonators in the different branches do not overlap. Moreover, a small "dead zone" arises when the ring resonators are perfectly matched in a small range of values of the influence of external material containing the influence value that makes the resonance peaks coincide. Furthermore, measurement ambiguity may arise, because different degrees of influence of external material in different ranges, separated by dead zones, can result in the same detected broadband output amplitude.

The dead zones can be handled or prevented in various ways. In one embodiment, wherein a small range of values of the influence of the external material must be measured very sensitively, the layout of the sensor may be selected so that matching ring resonators are used in the branches and a small mismatch between the branches as regards the optical path lengths the waveguides outside the ring resonators, to ensure that zero output of the interferometer occurs outside the small range. Thus both types of dead zones are avoided. Alternatively a small mismatch in the path lengths of the ring resonators may be used to provide for overlapping resonance peaks, with a distance between the central wavelengths of the peaks in different branches at a value of the influence at all values in the small range.

In another embodiment, wherein a larger range of values of the influence of the external material must be measured, dead zones may be prevented by choosing a waveguide layout and/or waveguide material that increases the width of the resonance peaks, and/or decreases the distance between resonance peaks to such an extent that dead zones are avoided. As a result the broadband detection result will show effects of changes of the influence of the external material over the entire range of influence values. A similar effect can be achieved by using filters with broad ranges of strong transmission phase change as a function of wavelength, for example by including a plurality of ring resonators in each branch.

In another embodiment a plurality of interferometers may be used on the substrate, with dead zones in respective different wavelength ranges, so that for each possible value of the influence of the external material at least one of the interferometers will not be in a dead zone.

In another embodiment changes in the influence of the external material are determined by counting a number of dips in the broadband detection amplitude when the influence of the external material changes. Thus the dead zones may be tolerated, and in fact they may be used to provide for a digital determination of the influence. The sensor may comprise a data processing circuit coupled to the detector and programmed to count dips in the output signal from the detector.

In an embodiment a combination of a plurality of interferometers as described in the preceding may be used, each interferometer having an associated round going path length of both ring resonators in its branches. In a further embodiment all interferometers may be integrated on the same substrate. Reduction of the ring round going path length leads to widening of the measurement range and reduction of the sensitivity. By using a plurality of interferometers with mutually different associated ring sizes the measurement range can be extended. An interferometer with smaller round going path length may be used to obtain a coarse measurement and an interferometer of larger dimension may be used to refine that measurement, the coarse measurement resolving ambiguity. In an embodiment two interferometers are used with mutually different associated ring sizes, but more may be used.

A plurality of detectors and a data processing circuit (not shown) may be provided to collect data representing the measured intensity values from the different interferometers. The data processing circuit may have a program to make it compute data corresponding to shift values for the respective interferometers, with known ambiguity for shift over an integer number of distances between the peaks. That is, the data obtained for each interferometer defines a periodic series of possible shift values of propagation per unit length in each resonator ring, with mutually different periods for different interferometers. The program comprises instructions to eliminate at least part of this ambiguity by selecting a shift value at which possible shift values from different interferometers coincide.

In order to provide for a continuous measurement range the width of the resonance peaks is preferably made as wide as the distance between the peaks. Alternatively, a continuous measurement range may be provided for by using a plurality of interferometer as described, all having substantially the same dimension ring resonators 16a,b, but with slight and mutually different mismatches between the branches in at least all but one of the interferometers.

A mismatch may introduced for example by designing the waveguides of the branch that feed to or from the ring resonators to have different optical length in different branches or by designing the ring resonators 16a,b in an interferometer to have slightly different diameters. This has the effect that the value of the influence of the external material at which the peaks in the transmission coefficients overlap is slightly shifted. By using a plurality of interferometers with different shifts of this type, it can be ensured that at least one of the interferometers is not in its "dead zone" under all circumstances.

A common broadband light source may be used to supply light to all interferometers via one or more splitters. An embodiment light from different interferometers is detected separately, for example by using a plurality of detectors or by means of time sharing of detectors. One or more detectors and a data processing circuit (not shown) may be provided to collect data representing the measured intensity values from the different interferometers. The data processing circuit may have a program to select at least one of the interferometers that is not in its dead zone, and to compute an output from the measurement from that (or those) interferometer by applying a correction for its (or their) known mismatch.

The use of such a plurality of detectors with mutually different mismatch but otherwise similar ring resonators 16a,b may be combined with the use of a further interferometer with ring resonators 16a,b of different dimension, to provide for disambiguation and/or to control selection of at least of the plurality of interferometers that is not in its dead zone.

Although embodiments have been described wherein the branches have substantially equal transmission coefficients at wavelengths outside the peaks, combined with the use of couplers that provide for zero output from the interferometer at those wavelength, it should be appreciated that this is not necessary. A non zero output that is substantially unaffected by changes of the influence of the external material at wavelengths outside the resonance peaks need not inhibit measurement of the influence from the broadband detection result. However, it is preferred to keep the output at those wavelengths small. This improves the signal to noise ratio.

A special advantage of the sensor is that no electrically conductive components need be provided. Electrical conductors to or in the light source and the detector may be placed at a distance, coupled to the sensor via optical fibres. This makes the sensor compatible with use in equipment where electrical conductors must be avoided.

Figure 5 shows an application to measurements in an MRI scanner 49 (Magnetic Resonance Imaging scanner). Herein sensor 40 is positioned in a field application region of the MRI scanner, for example on or in the body of a patient, and connected to a light source 42 and detector 44 outside the field application region via optical fibres. This makes it possible to perform additional measurements on or in an object using the sensor during MRI scanning of that object.

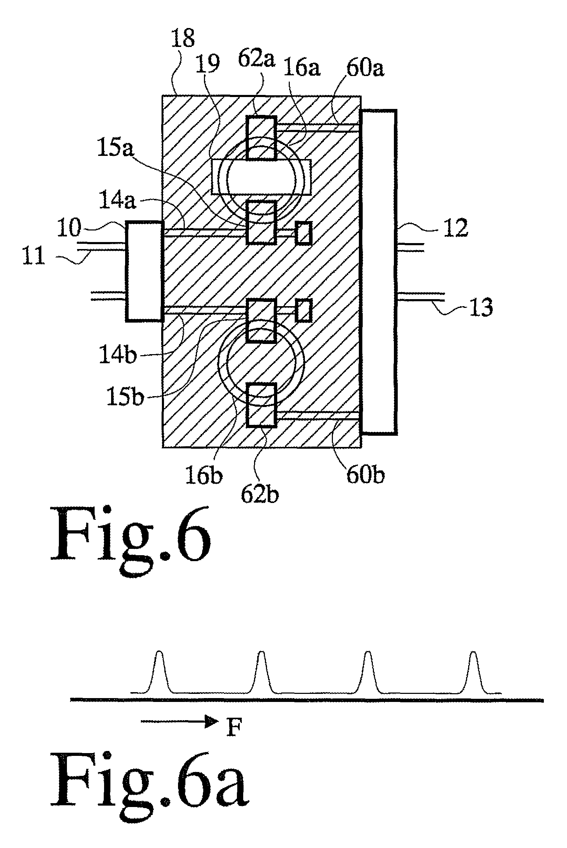

Figures 6 shows an example of an alternative configuration wherein two intermediate couplers coupled to ring resonators 16a,b are used. In figure 6 further intermediate couplers 62a,b are added to the respective ring resonators 16a,b coupled to the inputs of the output coupler 12.

Figure 6a shows the amplitude of the transmission coefficient of a branch according to figure 6, from the output of input coupler 10 to the input of output coupler 12, through intermediate coupler 15a,b and further intermediate coupler. As can be seen the amplitude increases at a series of resonance peaks and becomes nearly zero outside the resonance peaks. The phase of the transmission coefficient has a staircase profile with steps that rise by 180 degrees at the wavelengths of the resonance peaks, with a slope corresponding to the width of the peaks, when the intermediate couplers are at mutually opposite positions along the resonator loop.

As a result, when the peaks of the different branches do not overlap, light from successive wavelength ranges between the peaks will interfere constructively and destructively in alternating ones of these ranges respectively. However, no substantial interferometer output results in any of these ranges between peaks, because the amplitude of the transmission coefficient is zero. In contrast to the interferometer of figure 1, this is independent of matching between the branches to provide for zero output outside the wavelengths of the peaks.

Significant interferometer output amplitude occurs only at the wavelenghts in the resonance peaks. The influence of the external material shifts the positions of the wavelengths, but not the broadband amplitude when the peaks of the different branches do not overlap. The detected broadband output changes under the influence of the external material when the peaks have overlap. A better dynamic range at comparable sensitivity for measuring the influence of external material is realized, compared to the interferometer of figure 1, because the phase of the transmission coefficients of the branches rises in a step as a function of wavelength in the overlap range instead of rising, falling and then rising again as in the case of the interferometer of figure 1.

Although this effect has been described for an embodiment with ring resonators, it should be appreciated that a similar improvement can be realized by using a first and second intermediate coupler along the band position determining waveguide of any filter. The larger the distance between the intermediate couplers, the higher the sensitivity. In optimal effect is realized with input and output using intermediate couplers at points that provide for maximum phase difference, but less distance is also possible. For example the intermediate couplers of the embodiment of figure 6 may a quarter of the loop apart.

It may be noted that dead zones can arise also in the embodiment of figure 6, when the influence of material from the environment is of a size that shifts the peaks of the ring resonator 16a of one interferometer branch out of overlap with the peaks of the ring resonator 16b of the other branch.

Similar measures as for the embodiment of figure 1 may be taken to handle the dead zones, if necessary.

Optionally, the output light from the interferometers may be combined and supplied to a common broadband detector. In the resulting combined light different interferometers provide for sensitivity to influence from external material in different ranges of influence values. However, this may result in a very complex interferometer, which may be hard to calibrate.

Although embodiments have been shown wherein each branch of the interferometer comprises a single ring resonator, it should be appreciated that alternatively a plurality of resonators may be used in each branch. This may be used for example to realize a transmission coefficient that varies over a broader frequency band than the narrow peaks of a single resonator,or for example to achieve a sharp phase change over only small change of the external material. For example, in each branch a plurality of ring resonators of mutually different size may be coupled successively to an input waveguide. Optionally, these ring resonators may be coupled successively to an output waveguide. However, more complex configurations may be used, for example with rings in rings, serially coupled rings etc. Known optical filter design techniques may be used to select an arrangement of ring resonators and their diameters that provides for a transmission coefficient that varies over a broader frequency band than the narrow peaks of a single resonator.

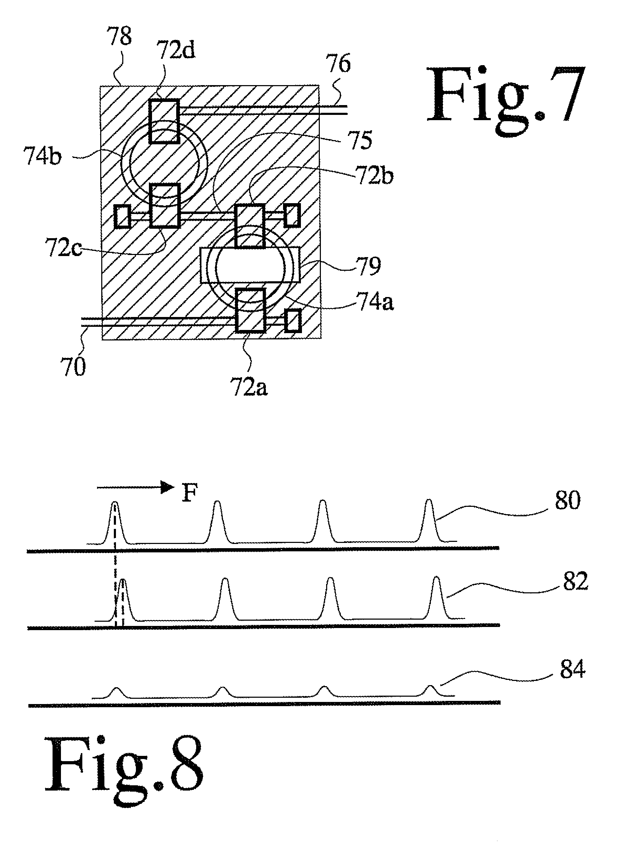

Figure 7 shows an embodiment of a multi-ring sensor arrangement, which may be used as a stand alone detector or as a branch of an interferometer. The arrangement comprises in input waveguide 70, a first, second, third and fourth coupler 72a-d, a first and second ring resonator 74a,b, an intermediate waveguide 75 and an output waveguide 76. The arrangement is covered by a cover layer 78, which shields the components from influence of external material, except in w window 79 in cover layer that leaves part of first ring resonator 74a exposed to influence of external material.

Input waveguide 70 is coupled to a first input of first coupler 72a. An output of first coupler 72a is coupled to an input of second coupler 72b via a first part of first ring resonator 74a. The ring is formed because a first output of second coupler 72b is coupled to a second input of first coupler 72a via a second part of first ring resonator 74a. Furthermore, second coupler 72b has a second output coupled to a first input of third coupler 72c via intermediate waveguide 75. An output of third coupler 72c is coupled to an input of fourth coupler 72d via a first part of second ring resonator 74b. The ring is formed because a first output of fourth coupler 72d is coupled to a second input of third coupler 72c via a second part of second ring resonator 74b. Furthermore, fourth coupler 72d has a second output coupled to output waveguide 76.

Although an embodiment with an intermediate waveguide 75 is shown, it should be appreciated that alternatively first and second ring resonator 74a,b may be directly coupled via second coupler 72b, intermediate waveguide 75 and third coupler 72a being omitted.

Various modes of operation may be supported, dependent on the relative diameters of first and second ring resonator 74a,b. In a first embodiment a matching design is used wherein first and second ring resonator 74a,b provide for substantially equal resonance frequencies absent external influence.

Figure 8 illustrates operation by showing the amplitudes 80, 82 of the first and second transmission coefficients of a first sub-arrangement, of first ring resonator 74a and first and second coupler 72a,b, and a second sub-arrangement of second ring resonator 74b and third and fourth coupler 72c,d, respectively. Under influence of external material the resonance peaks in the first transmission coefficient 80 shift relative to those of the second transmission coefficient 82. The resulting transmission coefficient 84 of the combination of these sub-arrangements is the product of the first and second transmission coefficients. As a result the transmission coefficient of the combination of these sub-arrangements has peaks only when there is overlap between the resonance peaks of the first and second transmission coefficients, with a peak size that depends on the amount of overlap.

In operation, a detection system like that of figure 4 may be used. Broadband light is applied to input waveguide 70. This gives rise to light in output waveguide 76 with a spectrum of peaks defined by the amplitude of the resulting transmission coefficient 84. A broadband detector is used to detect the intensity of the light in output waveguide 76. The detected intensity is proportional to the overlap between the peaks of the first and second transmission coefficients 80, 82, which is dependent on the degree of influence of external material on first ring resonator 74a. It may be appreciated that this detection is insensitive for common influences on ring resonators 74a,b such as temperature changes of the sensor.

In a second embodiment the diameters of first and second ring resonators 74a,b are made intentionally different, so that the distances D1 between the frequencies of successive resonance peaks in the first transmission coefficient are different from the distances D2 between the frequencies of successive resonance peaks in the second transmission coefficient. In an embodiment, the diameters are designed so that N*D1=(N+1)*D2, where N is an integer greater than one, N=10 for example or N from a range from five to a hundred. Alternative diameter combination N*D1 =M*D2, with N and M integers and M>N, may be used. The effect of this difference in diameters is that only every Nth resonance peak of the first transmission coefficient will overlap with a resonance peak of the second transmission coefficient, if at all.

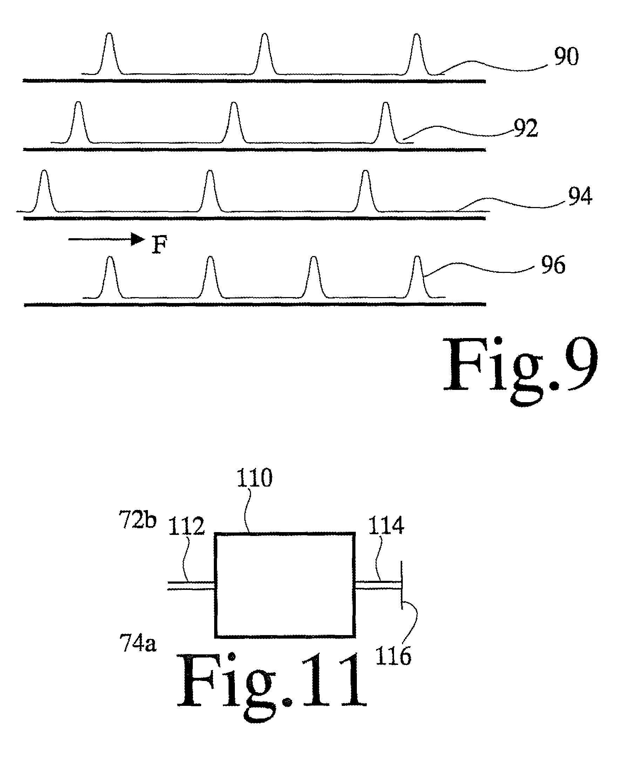

Figure 9 illustrates the overlap, showing first transmission coefficients 90, 92, 94 of the first sub-arrangement with increasingly shifted resonance peaks due to external influence. Furthermore second transmission coefficients 96 are shown, with resonance peaks of the second sub-arrangement, which do not shift due to the external influences. By way of example, twice the distance between the peaks in the first transmission coefficients equals three times the distance between the peaks in the second transmission coefficients, so N=2. When there is overlap between the peaks of the first and second transmission coefficients, the distance between successive overlaps is N times the distance D1 between the peaks in the first transmission coefficients.

In operation, a detection system like that of figure 4 may be used. Broadband light is supplied at the input and the output light intensity is measured as a function of wavelength. An intensity detector with a resolution of at least N times the distance between the peaks in the first transmission coefficients is used. This makes it possible to measure the intensity due to individual overlaps. Because the distance between successive overlaps is increased N-fold compared to the case when matching ring resonators are used, a much less complex detector suffices to detect individual overlaps than in the case of matching ring resonators.

Moreover, as can be seen from figure 9, increasing shift due to external material leads to overlap at peaks at successively different peak positions. That is, there is already overlap between peaks if the shift is 1/Nth of the distance between the overlaps. This makes it possible to provide for increased resolution of the measurement of the influence of external material with a detector of low spectral resolution. It may be appreciated that this detection is substantially insensitive for common influences on ring resonators 74a,b such as temperature changes of the sensor. Common influences may need to be accounted for in the wavelength dependent measurement, but this effect is kept small because the required wavelength dependence has been reduced.

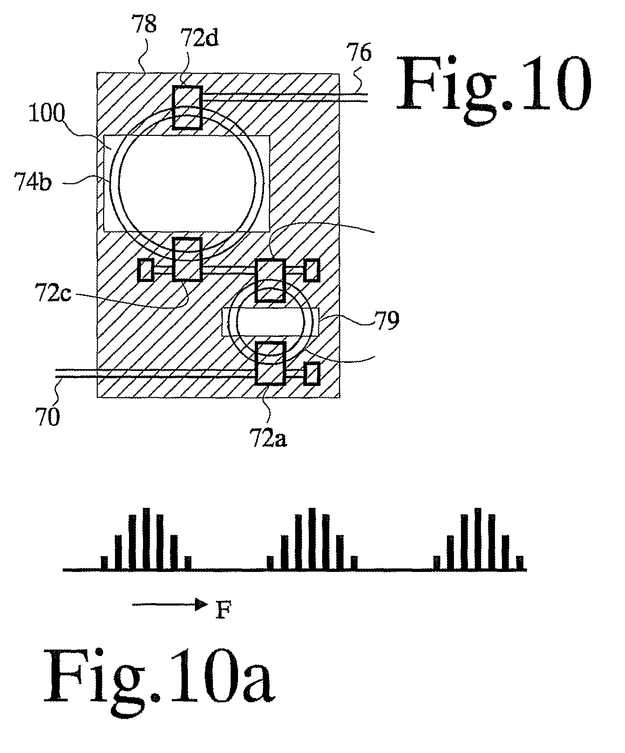

Figure 10 shows a third embodiment wherein the diameters of first and second ring resonators 74a,b differ by a factor of at least two. Much larger factor, of at least five may be used. Furthermore, windows 79, 100 have been provided in the cover layer 78 at both ring resonators 74a,b. Equivalently, the entire cover layer may be omitted. The fact that both ring resonators are at least partly uncovered has the effect that the resonance peaks due to one of the ring resonators 74b will be wider spaced apart much further than those due to the other ring resonator. In the resulting transmission coefficients this results in groups of peaks with mutual distances between the peaks determined by the biggest ring resonator, and distance between the groups determined by the smallest ring resonator and a variable amplitude of the peaks in each group determined by the smallest ring resonator, as illustrated in figure 10a.

In operation, a detection system like that of figure 4 may be used. Broadband light is supplied and the output light intensity is measured as a function of wavelength. The position of the groups of peaks is used to determine a coarse measurement of the influence of external material and the amplitudes of the peaks is used to refine that measurement. In this way, ambiguities in the measurement of the influence can be avoided. It may be appreciated that this detection is to a certain extents insensitive for common influences on ring resonators 74a,b such as temperature changes of the sensor. Such a common influence may lead to a wavelength shift of a group of peaks, which may introduce temperature dependence, but this effect is kept small because it only affects the relatively weak dependence due to the small ring resonator.

Although operation of the embodiments of figures 6-10 has been described in a stand alone context, i.e. without using a Mach Zehnder interferometer configuration, it should be appreciated that the arrangements of these embodiments may be used as branches of such an interferometer. Matched arrangements may be used in the branches, one without openings in the protection layer and the other with openings as described.

Although embodiments have been shown that with a separate input and outputs from the sensor, so that two fibres may be used to supply light and receive light for detection, it should be appreciated that a single terminal may suffice, so that a single fibre may suffice. Figure 11 shows an embodiment of the sensor 110, with input and output waveguides 112, 114, wherein a reflector 116 is provided to reflect back the output light. Sensor 110 may have an interferometer configuration or a configuration where the light travels through a plurality of ring resonators in series. In this way input light and output light may be supplied and received back respectively at the input waveguide. Reflector 116 may be integrated on the same substrate with the remaining components.

## Claims

1. An optical sensor system for sensing an effect of external material upon propagation of light, comprising a broadband light source, a broadband light detector and an interferometer comprising
- an input splitter and an output combiner coupled between the broadband light source and the broadband light detector;
- a first and second interferometer branch integrated on a common substrate, the first and second interferometer branch being coupled from a first output of the input splitter to a first input of the output combiner and from a second output of the input splitter to a second input of the output combiner respectively, the first and second branch comprising a first and second optical filter, each with alternating pass bands and blocking bands as a function of wavelength at wavelength positions defined by optical path lengths of a first and second waveguide in the first and second filter respectively;
- a layer shielding at least part of the first optical path from influence of the external material and leaving at least part of the second optical path exposed to influence of the external material, the part of the second optical path that is left exposed to influence of the external material having a larger size than an exposed part of the first optical path, if any.

2. An optical sensor system according to claim 1, wherein the first branch comprises a first intermediate coupler coupled between the input splitter and the first waveguide and a second intermediate coupler coupled between the first waveguide and the output combiner, the first and second intermediate coupler being located at mutually different positions along the first waveguide, the second branch comprising a third intermediate coupler coupled between the input splitter and the second waveguide and a fourth intermediate coupler coupled between the second waveguide and the output combiner, the third and fourth intermediate coupler being located at mutually different positions along the second waveguide.

3. An optical sensor system according to claim 1 or 2, wherein the first and second waveguide each have a looped configuration, forming a first and second ring resonator respectively.

4. An optical sensor system according to any one of the preceding claims, comprising a further interferometer, comprising a further input combiner, a third and fourth branch integrated on said substrate, the third and fourth branch being coupled from the input splitter or a further input splitter to a first and second input of the further combiner respectively, the third and fourth branch comprising a third and fourth filter respectively, at least one of which has pass bands and blocking bands alternating a smaller wavelength distances than those of the first and second filter, the third and fourth filter comprising third and fourth waveguides that are determinative of wavelength positions of the pass bands and blocking bands, the layer shielding at least part of a fourth waveguide of the fourth filter from the external material and leaving at least part of a third waveguide of the third filter exposed to the external material.

5. An optical sensor system according to claim 4, wherein the waveguides in the third and fourth filters have mutually matching optical path lengths, differing by at least a factor of two from the optical path lengths of the waveguides in the first and second filter.

6. A sensing system according to claim 5, comprising a data processing circuit configured to obtain first and second detection data representing light intensity at the output of the interferometer and the further interferometer respectively, to compute a value of an effect of the external material from the second detection data and to refine said value using the first detection data.

7. An optical sensor system according to claim 4, wherein the optical path lengths of the waveguides of the third and fourth filters are mutually different to an extent that shifting of pass bands and blocking bands of the second and fourth filters under common influence of the external material causes pass bands and blocking bands of the second and fourth filters to coincide with pass bands and blocking bands of the first and third filter respectively at mutually different values of a degree of influence of the external material.

8. An optical sensor system according to claim 7, comprising a data processing circuit configured to obtain first and second detection data representing light intensity at the output of the interferometer and the further interferometer respectively, to compute a value of an effect of the external material using the first or second detection data dependent on a size of the effect.

9. An optical sensor system according to any one of the preceding claims, wherein each of the first and second filter comprises a plurality of ring resonators.

10. An optical sensor system according to any one of the preceding claims, comprising a reflector coupled to the output of the second coupler and configured to reflect light that emerges from the interferometer back into the interferometer, the light source and the detector being coupled to a common input of the splitter.

11. A sensing system according to any one of the preceding claims, comprising at least one optical fiber coupling the sensor to the light source and the detector, the sensing system furthermore comprising an magnetic resonance image scanner with a scanning region, the sensor being located inside said scanning region, the light source and the detector being located outside said scanning region.

12. An optical sensor for use in an optical sensor system in any one of the preceding claims, the optical sensor comprising said interferometer on said substrate and at least one terminal for coupling the interferometer to the light source and the detector

13. An optical sensor for sensing an effect of external material upon propagation of light, the sensor comprising
- an input for receiving light from a light source;
- an output for outputting light to a detector;
- a first and second optical filter coupled in series with each other between the input and the output, each filter having alternating pass bands and blocking bands as a function of wavelength, with transitions between the bands at wavelength positions determined by optical path lengths though a first and second waveguide in the first and second filter respectively, at least one of the waveguides being at least partly exposed to influence of the external material.

14. An optical sensor according to claim 13, wherein the first and second waveguide are each coupled in a loop configuration respectively to form a first and second ring resonator, a round going optical path length of the first ring resonator is at least twice that of the second ring resonator

15. An optical sensor according to claim 13, wherein the first and second waveguide are each coupled in a loop configuration respectively to form a first and second ring resonator, round going optical path lengths of the first and second ring resonator being such that a ratio between a first distance between resonant wavelengths of the first ring resonator to a second distance between resonant wavelengths of the first ring resonator is N to M, where N is an integer of at least two and M is an integer grater than N
